# EUROPÄISCHE PATENTSCHRIFT

(11) **EP 3 017 973 B1**
(45) Veröffentlichungstag und Bekanntmachung des Hinweises auf die Patenterteilung: **29.03.2017**
(21) Anmeldenummer: 15002761.3
(22) Anmeldetag: 24.09.2015
(51) Int. Cl.: B60G 7/00, B62D 35/02, B60T 5/00, B62D 37/02

(54) **FAHRWERKSLENKER MIT EINER LUFTLEITEINRICHTUNG**
STEERING ARM WITH AIR GUIDANCE DEVICE
BRAS DE SUSPENSION DOTE D'UN DISPOSITIF DE GUIDAGE D'AIR

(30) Priorität: 07.10.2014 DE 102014014834
(43) Veröffentlichungstag der Anmeldung: 11.05.2016
(73) Patentinhaber: AUDI AG, 85045 Ingolstadt (DE)
(72) Erfinder: BROMME, Gero, DE - 09394 Hohndorf (DE); EICHLER, Mario, DE - 08066 Zwickau (DE)
(74) Vertreter: Reichert, Thomas Klaus

(56) Entgegenhaltungen:
- EP-A1- 0 778 187
- EP-A1- 2 476 565
- EP-A1- 2 687 389
- WO-A1-2015/135617
- DE-A1-102010 018 779
- DE-A1-102013 002 626
- JP-A- 2006 056 463
- JP-A- 2009 029 230
- JP-A- 2009 196 557
- JP-U- H0 239 906
- US-A1- 2007 096 420

## Beschreibung

Die vorliegende Erfindung betrifft einen Fahrwerkslenker mit einer Luftleiteinrichtung, wobei der Fahrwerkslenker mindestens einen endständigen Lagerabschnitt, der Mittel zum Lagern des Fahrwerkslenkers an einem weiteren Fahrzeugbauteil enthält, und einen Mittelabschnitt aufweist und wobei die Luftleiteinrichtung ein flächiges Luftleitelement und einen Verbindungsabschnitt aufweist.

Derartige Fahrwerkslenker, auch Querlenker oder einfach Lenker genannt, werden im Fahrzeugbau als Teil einer Radaufhängung eingesetzt und können mit einer Luftleiteinrichtung versehen sein, um damit unter anderem eine bessere Umströmung des Unterbodens im Bereich der Radaufhängung zu erzielen und einen Schutz gegen Steinschläge zu gewährleisten. Die Radaufhängung verbindet das Rad mit der Karosserie und führt es unter Gewährung bestimmter Freiheitsgrade. Fahrwerkslenker können aus umgeformten (Stahl-)Blechen oder aus (umgeformten) Strangpressprofilen, beispielsweise einem Aluminium-Strangpressprofil, erzeugt werden. Der Fahrwerkslenker hat endständige Lageraufnahmen, in die ein vorzugsweise als Gummi-Metall-Lager ausgebildetes Lenkerlager eingesetzt werden kann. Die Lageraufnahmen können je nach Ausführungsform aus zwei konzentrischen Durchzügen in zwei parallel verlaufenden Seitenstegen des Fahrwerklenkers gebildet sein oder aus einer Führungshülse, in die das als Gummi-Metall-Hülsenlager ausgebildete Lenkerlager eingepresst wird, und die je nach Bauweise des Fahrwerkslenkers an diesen angeschweißt ist oder in einer oder mehreren Bohrungen in den Seitenstegen des Fahrwerkslenkers gehalten ist oder über einen Umformvorgang integral aus dem Material des Fahrwerkslenkers gebildet ist.

Die JP 4924268 B2 zeigt eine Schutzabdeckung im Bereich des Fahrwerks. Die Abdeckung ist an einem Fahrwerkslenker befestigt. Hierbei handelt es sich um einen Querlenker, weshalb die Abdeckung in Fahrtrichtung eine Aerofläche besitzt, um den Luftwiderstand des Lenkers zu minimieren. Die Verbindung zum Lenker wird über Durchbrüche oder Löcher im Fahrwerkslenker entlang der Seitenstege gebildet. Die Abdeckung besitzt hierfür Clipverbindungen, die durch das Einführen in die Bohrung zusammengedrückt und dabei vorgespannt werden, um auf der Rückseite eine formschlüssige Verbindung mit dem Fahrwerkselement zu bilden.

Die KR 10 2004 0003821 A offenbart eine Schutzvorrichtung, die als Clip ausgebildet ist. Die Schutzvorrichtung wird im Bereich des Lenkerlagers befestigt. Der Lenker besitzt endständig eine Lageraufnahme, die als ein angeschweißtes Lagerauge ausgebildet ist. Die Schutzvorrichtung ist als Federclip ausgebildet, der über das Lenkerauge geschoben wird. Der Clip besitzt einen c-förmigen Querschnitt, wobei die Öffnung einen kleineren Spalt als das Lenkerauge aufweist. Beim überstülpen des Clips wird dieser Spalt vergrößert, sodass an der Rückseite des Clips eine Verformung hervorgerufen wird und sich der Clip somit vorspannt. An der Öffnung des Clips besitzt dieser halbkreisförmige Aussparungen, die mit der runden Stabverbindung der Lageraufnahmen eine formschlüssige Verbindung eingehen.

Die EP 0778187 A1 beschreibt eine Luftleitvorrichtung, die an einem Fahrwerksbauteil mittels mehrerer Einhakverbindungen befestigt ist. Zum Befestigen wird die Luftleitvorrichtung soweit um seine Längsachse verbogen, dass der Fahrwerkslenker zwischen den Haltelaschen hindurchgeführt werden kann. Anschließend wird das Element wieder entspannt, sodass die Haltelaschen den Fahrwerkslenker umgreifen und die Haltezunge in die Einrastöffnung eingreift.

Aufgabe der vorliegenden Erfindung ist es einen Fahrwerkslenker mit einer Luftleiteinrichtung bereitzustellen, wobei die Luftleiteinrichtung lösbar und besonders einfach an dem Fahrwerkslenker befestigt werden kann.

Diese Aufgabe wird durch die Merkmale des Patentanspruchs 1 gelöst.

Ein Fahrwerkslenker mit einer Luftleiteinrichtung, wobei der Fahrwerkslenker mindestens einen endständigen Lagerabschnitt, der Mittel zum Lagern des Fahrwerkslenkers an einem weiteren Fahrzeugbauteil (wie zum Beispiel einem Radträger, einem Hilfsrahmen oder direkt an einer Fahrzeugkarosserie) enthält, und einen Mittelabschnitt aufweist und wobei die Luftleiteinrichtung ein flächiges Luftleitelement und einen Verbindungsabschnitt, der mindestens ein elastisch biegsames Verbindungselement umfasst, das an einem von einem Seitensteg des Fahrwerkslenkers abragenden Kontaktabschnitt der Mittel zum Lagern lösbar festgelegt ist, aufweist.

Indem die Luftleiteinrichtung mindestens einen Verbindungsabschnitt mit einem elastisch biegsamen Verbindungselement aufweist, das an einem von einem Seitensteg des Fahrwerkslenkers abragenden Kontaktabschnitt der Mittel zum Lagern lösbar festgelegt ist, kann die Luftleiteinrichtung mit geringen Kraftaufwand und ohne zusätzliche Befestigungsmittel einfach mit dem Fahrwerkslenker verrastet werden. Durch entsprechenden Zug an der Luftleiteinrichtung lösen sich die elastischen Verbindungselemente wieder rückstandslos von den Mitteln zum Lagern, so dass ein Austausch auch sehr einfach erfolgen kann.

In einer bevorzugten Ausführung wird der Kontaktabschnitt von einem Durchzug einer Lageröffnung oder einer Außenhülse eines in der Lageröffnung eingesetzten Hülsenlagers gebildet. Durchzüge können beim Ausstanzen der Lageröffnungen in den Lagerabschnitten des Fahrwerkslenkers durch einen biegetechnischen Umformvorgang erzeugt werden. Sie dienen primär dem Zweck die Auflagefläche auf das später eingesetzte Hülsenlager zu erhöhen. Von der durch den Seitensteg gebildeten Ebene sind die Durchzüge rechtwinklig abgewinkelt und bieten so einen besonders vorteilhaften Kontaktabschnitt für die komplementären Verbindungselemente des Verbindungsabschnitts der Luftleiteinrichtung. Alternativ kann aber auch die Außenhülse des in der Lageröffnung eingesetzten Hülsenlagers genutzt werden, wenn diese etwas über die Ebene des Seitenstegs hinaussteht, wodurch unter anderem auch an der von den Durchzügen abgewandten Seite ein Formschluss erzeugbar ist.

In einer bevorzugten Ausführung quert das Luftleitelement im eingebauten Zustand die Unterseite des Fahrwerkslenkers. Dies bietet große Vorteile bei der Führung des Luftstroms am Unterboden des Fahrzeugs und schützt den Fahrwerkslenker weiterhin besonders gut vor Steinschlag und dem Aufsetzen auf dem Unterboden. Die Wirkung kann noch weiter verbessert werden, wenn das Luftleitelement an der in Fahrtrichtung vorderen Seite des Fahrwerkslenkers nach oben gezogen ist.

In einer bevorzugten Ausführung umgreift das mindestens eine Verbindungselement den Kontaktabschnitt zumindest teilweise formschlüssig. Die Verbindungselemente umklammern den Kontaktabschnitt der Mittel zum Lagern und sind bei Bedarf auch wieder lösbar.

In einer bevorzugten Ausführung weist der Fahrwerkslenker zwei einander gegenüberliegende, endständige Lagerabschnitte mit dazwischen angeordnetem Mittelabschnitt auf. Diese Bauform wird auch als Zweipunktlenker bezeichnet. Der Fahrwerkslenker kann als Blechlenker oder Strangpressprofil erzeugt werden. Zur Gewichtsersparnis ist die Wanddicke gering zu halten und der Fahrwerkslenker im Inneren hohl, insbesondere mit einem U-förmigen Querschnitt, ausgebildet.

In einer bevorzugten Ausführung weist die Luftleiteinrichtung zwei Verbindungsabschnitte auf, die die Luftleiteinrichtung zwischen den Kontaktabschnitten der beiden Lagerabschnitte verspannen. Dabei üben die Verbindungsabschnitte jeweils eine permanente Druckkraft auf die zugeordneten Mittel zum Lagern aus und stützen sich so in beiden Richtungen an den Mitteln zum Lagern ab. In einer besonders bevorzugten Ausführung umfasst einer der Verbindungsabschnitte eine Wellfeder. Dadurch wird der Verbau erleichtert, da sich die Wellfeder gut komprimieren lässt und dennoch eine dauernde Kraft auf den Durchzug ausüben kann. Die Wellfeder ist vorzugsweise werkstoffeinheitlich und einstückig im Verbindungsabschnitt ausgebildet.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:

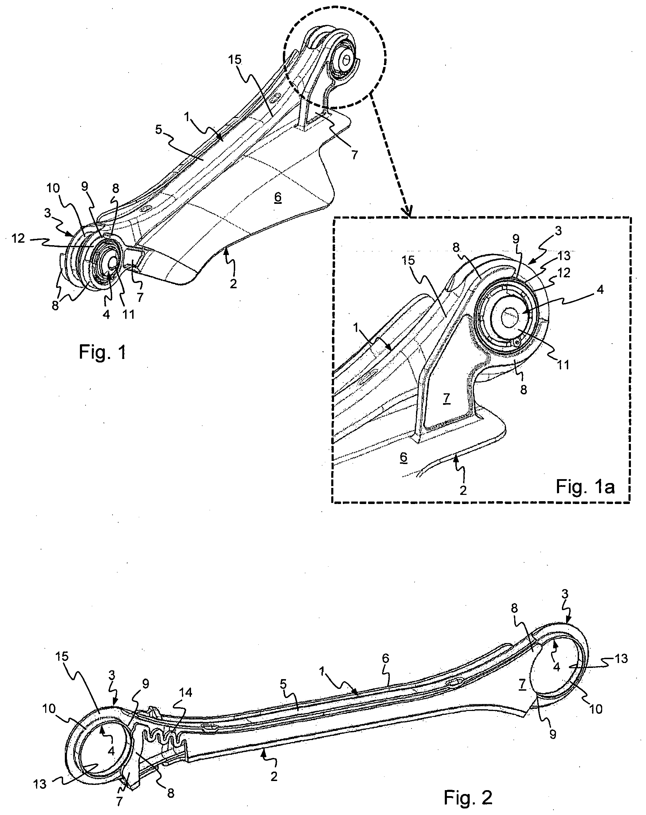

Fig. 1 eine perspektivische Ansicht einer ersten Ausführungsform des Fahrwerkslenkers mit einer Luftleiteinrichtung;
Fig. 1 a eine Detailansicht des Lagerabschnitts des Fahrwerkslenkers aus Fig. 1;
Fig. 2 eine Schnittansicht einer zweiten Ausführungsform des Fahrwerkslenkers mit einer Luftleiteinrichtung.

Gemäß der Fig. 1 bzw. Fig. 1a hat ein Fahrwerkslenker 1 zwei endständige und einander gegenüberliegende Lagerabschnitte 3 mit einem dazwischenliegenden Mittelabschnitt 5. Demnach ist der Fahrwerkslenker 1 als sogenannter "Zweipunktlenker" ausgebildet. Der Fahrwerkslenker 1 besteht aus einem Metall, insbesondere aus einem gestanzten und/oder gebogenen Metallblech, wobei eine einschalige Bauweise mit zwei einander gegenüberliegenden Seitenstegen eine nach unten offene U-Profilform bildet. Jeder der beiden Lagerabschnitte 3 hat zwei koaxial zueinander angeordnete Lageröffnungen 13, die durch einen Stanzvorgang erzeugt werden und jeweils einen Durchzug 10 zur Vergrößerung der Auflagefläche auf einer Außenhülse 12 eines in die Lageröffnung 13 eingesetzten Hülsenlagers 11 bilden. Das Hülsenlager 11 ist als klassisches Gummi-Metall-Hülsenlager mit einer metallischen Innenhülse in einer metallischen Außenhülse 12 und zwischengelagerter Gummischicht ausgebildet. Die Lageröffnung 13, das Hülsenlager 11, insbesondere die Außenhülse 12, sowie die Durchzüge 10 bilden definitionsgemäß Mittel zum Lagern 4 des Fahrwerkslenkers 1. Die Luftleiteinrichtung 2 besteht komplett aus Kunststoff und hat ein flächiges Luftleitelement 6, das dazu dient den Luftstrom während der Fahrt um den Fahrwerkslenker 1 strömungstechnisch günstig herum zu leiten, sowie den Fahrwerkslenker 1 vor Beschädigungen durch Steinschlag oder einem Aufsetzen auf dem Untergrund zu schützen. Das Luftleitelement 6 erstreckt sich im eingebauten Zustand quer unterhalb des Fahrwerkslenkers 1, vor allem unterhalb dessen Mittelabschnitts 5. Beiderseits der Luftleiteinrichtung 2 ragt jeweils ein Verbindungsabschnitt 7 von dem Luftleitelement 6 nach oben ab. Ein Verbindungsabschnitt 7 hat zwei parallele und symmetrische Arme, die sich an ihrem freien Ende jeweils zu einem elastisch biegsamen Verbindungselement 8 aufgabeln. Die Biegsamkeit ergibt sich aus der Geometrie und der Materialbeschaffenheit der Verbindungselemente 8. Die Verbindungselemente 8 können auf die in den Lageröffnungen 13 eingebauten Außenhülsen 12, die mit ihrem von einem Seitensteg 15 des Fahrwerkslenker 1 abragenden Teil einen Kontaktabschnitt 9 bilden, formschlüssig aufgeschoben werden und halten die Luftleiteinrichtung 2 so an dem Fahrwerkslenker 1.

Bezüglich des Aufbaus des Fahrwerkslenkers 1 aus Fig. 2 wird auf die analogen Ausführungen dazu in Fig. 1 verwiesen. Wichtig bei dieser zweiten Ausführungsform ist, dass das Querschnittsprofil zumindest des Mittelabschnitts 5 nach unten offen ist, da die Verbindungsabschnitte 7 der Luftleiteinrichtung 2 von unten in den Hohlraum des Fahrwerkslenkers 1 eingreifen. Dabei stützt sich einer der beiden Verbindungsabschnitte 7 mit seinem komplementär zum Durchzug 10 der Lageröffnung 13 ausgeformten Verbindungselement 8 an dem Kontaktabschnitt 9 eben dieses Durchzugs 10 ab. Auf der gegenüberliegenden Seite ist das ebenfalls komplementär zum dortigen Durchzug 10 ausgeformte Verbindungselement 8 mit einer Wellfeder 14 versehen, die eine hohe Elastizität in diesen Verbindungsabschnitt 7 einbringt. Beim Einschieben der Verbindungsabschnitte 7 der Luftleiteinrichtung 2 in den Fahrwerkslenker 1 wird die Wellfeder 14 komprimiert und übt so eine permanente Druckkraft auf die Durchzüge 10 auf, wodurch sich die Luftleiteinrichtung 2 in dem Fahrwerkslenker 1 verspreizt. Das Luftleitelement 6 ist in der vorliegenden Schnittdarstellung nicht komplett sichtbar, verläuft jedoch im Wesentlichen quer unterhalb des Mittelabschnitts 5 des Fahrwerkslenkers 1. An dem in Fahrtrichtung vorderen Abschnitt des Luftleitelements 6 kann dieses so ausgeformt sein, dass es nach oben vor den Fahrwerkslenker 1 hochgezogen ist. Der hochgezogene Bereich kann ferner eine weitere Verrastung mit dem Fahrwerkslenker 1 über eine Rastnase ausbilden.

### Liste der Bezugszeichen:

- 1: Fahrwerkslenker
- 2: Luftleiteinrichtung
- 3: Lagerabschnitt
- 4: Mittel zum Lagern
- 5: Mittelabschnitt
- 6: Luftleitelement
- 7: Verbindungsabschnitt
- 8: Verbindungselement
- 9: Kontaktabschnitt
- 10: Durchzug
- 11: Hülsenlager
- 12: Außenhülse
- 13: Lageröffnung
- 14: Wellfeder
- 15: Seitensteg

## Patentansprüche

1. Fahrwerkslenker (1) mit einer Luftleiteinrichtung (2), wobei der Fahrwerkslenker (1) mindestens einen endständigen Lagerabschnitt (3), der Mittel zum Lagern (4) des Fahrwerkslenkers (1) enthält, und einen Mittelabschnitt (5) aufweist und wobei die Luftleiteinrichtung (2) ein flächiges Luftleitelement (6) und einen Verbindungsabschnitt (7) aufweist, **dadurch gekennzeichnet, dass** der Verbindungsabschnitt (7) mindestens ein elastisch biegsames Verbindungselement (8) umfasst, das an einem von einem Seitensteg (15) des Fahrwerkslenkers (1) abragenden Kontaktabschnitt (9) der Mittel zum Lagern (4) lösbar festgelegt ist.

2. Fahrwerkslenker (1) nach Anspruch 1, **dadurch gekennzeichnet, dass** der Kontaktabschnitt (9) von einem Durchzug (10) einer Lageröffnung (13) oder einer Außenhülse (12) eines in der Lageröffnung (13) eingesetzten Hülsenlagers (11) gebildet wird.

3. Fahrwerkslenker (1) nach Anspruch 1 oder 2, **dadurch gekennzeichnet, dass** das Luftleitelement (6) im eingebauten Zustand die Unterseite des Fahrwerkslenkers (1) quert.

4. Fahrwerkslenker (1) nach einem der Ansprüche 1 bis 3, **dadurch gekennzeichnet, dass** das mindestens eine Verbindungselement (7) den Kontaktabschnitt (9) zumindest teilweise formschlüssig umgreift.

5. Fahrwerkslenker (1) nach einem der Ansprüche 1 bis 4, **dadurch gekennzeichnet, dass** der Fahrwerkslenker (1) zwei einander gegenüberliegende, endständige Lagerabschnitte (3) mit dazwischen angeordnetem Mittelabschnitt (5) aufweist.

6. Fahrwerkslenker (1) nach Anspruch 5, **dadurch gekennzeichnet, dass** die Luftleiteinrichtung (2) zwei Verbindungsabschnitte (7) aufweist, die die Luftleiteinrichtung (2) zwischen den Kontaktabschnitten (9) der beiden Lagerabschnitte (3) verspannen.

7. Fahrwerkslenker (1) nach Anspruch 6, **dadurch gekennzeichnet, dass** einer der Verbindungsabschnitte (7) eine Wellfeder (14) umfasst.

## Claims

1. Chassis control arm (1) with an air-guiding device (2), wherein the chassis control arm (1) has at least one terminal bearing section (3), comprising supporting means (4) for the chassis control arm (1), and a middle section (5) and wherein the air-guiding device (2) has a flat air-guiding element (6) and a connecting section (7), **characterised in that** the connecting section (7) has at least one elastically bendable connecting element (8), which is detachably fastened on a contact section (9) of the supporting means (4), said contact section protruding from a side web (15) of the chassis control arm (1).

2. Chassis control arm (1) according to Claim 1, **characterised in that** the contact section (9) is formed by a passage (10) of a bearing opening (13) or by an outer sleeve (12) of a sleeve bearing (11) inserted into the bearing opening (13).

3. Chassis control arm (1) according to Claim 1 or 2, **characterised in that** the air-guiding device (6) in a mounted state extends across the bottom side of the chassis control arm (1).

4. Chassis control arm (1) according to any one of Claims 1 to 3, **characterised in that** at least one connecting element (7) at least partially engages form fittingly around the contact section (9).

5. Chassis control arm (1) according to any one of Claims 1 to 4, **characterised in that** the chassis control arm (1) has two opposing terminal bearing sections (3) with said middle section (5) arranged therebetween.

6. Chassis control arm (1) according to Claim 5, **characterised in that** the air-guiding device (2) has two connecting sections (7), which clamp the air-guiding device (2) between the contact sections (9) of the two bearing sections (3).

7. Chassis control arm (1) according to Claim 6, **characterised in that** one of the connecting sections (7) comprises a wave spring (14).

## Revendications

1. Bras de suspension (1) avec un dispositif de guidage d'air (2), le bras de suspension (1) comportant au moins un tronçon de support terminal (3), qui contient des moyens de support (4) pour supporter le bras de suspension (1), et un tronçon médian (5) et le dispositif de guidage d'air (2) comportant un élément surfacique de guidage d'air (6) et un tronçon de liaison (7), **caractérisé en ce que** le tronçon de liaison (7) comprend au moins un élément de liaison (8) élastiquement flexible qui est fixé de manière amovible à un tronçon de contact (9), dépassant d'une traverse latérale (15) du bras de suspension (1), des moyens de support (4).

2. Bras de suspension (1) selon la revendication 1, **caractérisé en ce que** le tronçon de contact (9) est formé par un soyage (10) d'une ouverture de palier (13) ou d'une douille extérieure (12) d'un palier à douille (11) placé dans l'ouverture de palier (13).

3. Bras de suspension (1) selon la revendication 1 ou 2, **caractérisé en ce que**, à l'état monté, l'élément de guidage d'air (6) croise le dessous du bras de suspension (1).

4. Bras de suspension (1) selon l'une des revendications 1 à 3, **caractérisé en ce que**, l'au moins un élément de liaison (7) enveloppe au moins partiellement, avec concordance de forme, le tronçon de contact (9).

5. Bras de suspension (1) selon l'une des revendications 1 à 4, **caractérisé en ce que** le bras de suspension (1) comporte deux tronçons de support terminaux (3), à l'opposé l'un de l'autre, avec un tronçon médian (5) agencé entre ceux-ci.

6. Bras de suspension (1) selon la revendication 5, **caractérisé en ce que** le dispositif de guidage d'air (2) comporte deux tronçons de liaison (7), qui tendent le dispositif de guidage d'air (2) entre les tronçons de contact (9) des deux tronçons de support (3).

7. Bras de suspension (1) selon la revendication 6, **caractérisé en ce que** l'un des tronçons de liaison (7) comprend un ressort ondulé (14).
